(19) Europäisches Patentamt
European Patent Office
Office européen des brevets

(11) **EP 0 739 713 B2**

(12) **NEUE EUROPÄISCHE PATENTSCHRIFT**
Nach dem Einspruchsverfahren

(45) Veröffentlichungstag und Bekanntmachung des Hinweises auf die Entscheidung über den Einspruch:
**24.06.2009 Patentblatt 2009/26**

(45) Hinweis auf die Patenterteilung:
**02.07.2003 Patentblatt 2003/27**

(21) Anmeldenummer: **96106511.7**

(22) Anmeldetag: **25.04.1996**

(51) Int Cl.:
***B32B 27/32*** *(2006.01)*

(54) **Non-PVC-Mehrschichtfolie**

PVC-free multilayered film

Feuille multicouche exempte de PVC

(84) Benannte Vertragsstaaten:
**AT BE CH DE ES FR GB IT LI NL SE**

(30) Priorität: **26.04.1995 DE 19515254**

(43) Veröffentlichungstag der Anmeldung:
**30.10.1996 Patentblatt 1996/44**

(73) Patentinhaber: **Fresenius AG**
**61352 Bad Homburg v.d.H. (DE)**

(72) Erfinder:
• **Heilmann, Klaus**
**66606 St. Wendel (DE)**
• **Nicola, Thomas**
**57350 Spicheren (FR)**
• **Kreischer, Thomas**
**66113 Saarbrücken (DE)**

(74) Vertreter: **Luderschmidt, Schüler & Partner**
**Patentanwälte**
**Postfach 3929**
**65029 Wiesbaden (DE)**

(56) Entgegenhaltungen:
| | |
|---|---|
| EP-A- 0 206 826 | EP-A- 0 282 282 |
| EP-A- 0 369 447 | EP-A- 0 437 856 |
| EP-A- 0 564 206 | DE-A- 3 923 464 |
| GB-A- 2 023 497 | US-A- 4 778 697 |

• FRANCK A.; BIEDERBICK K. : "KUNSTSSTOFF - KOMPENDIUM: AUFBAU, POLYMERISATION, VERARBEITUNG, EIGENSCHAFTEN, ANWENDUNG DER THERMOPLASTE, ELASTOMERE, DUROPLASTE, POLYMERLEGIERUNGEN" 1990 , WÜRZBURG, VOGEL VERLAG.; DE XP002033624 * Seite 325 - Seite 326 *
• SAECHTLING H.: "INTERNATIONAL PLASTICS HANDBOOK FOR THE TECHNOLOGIST, ENGINEER AND USER" 1992 , MUNICH, CARL HANSER VERLAG.; DE XP002033625 * Seite 165 - Seite 164; Tabelle 26 *
• BRANDRUP J.; IMMERGUT E. H.: "POLYMER HANDBOOK: PHYSICAL DATA, POLYMERS " 1989 , NEW YORK, WILEY & SONS.; US XP002033683 references V/31 and V/30

Bemerkungen:
Die Akte enthält technische Angaben, die nach dem Eingang der Anmeldung eingereicht wurden und die nicht in dieser Patentschrift enthalten sind.

EP 0 739 713 B2

**Beschreibung**

Die Erfindung betrifft eine Non-PVC-Mehrschichtfolie aufweisend eine Außenschicht, mindestens eine Mittelschicht, eine Stützschicht sowie gegebenenfalls eine Siegelschicht, wobei alle Schichten im wesentlichen frei von PVC sind und bevorzugt als wesentliche Bestandteile Polyolefin-Homopolymere und/oder Polyolefin-Copolymere enthalten. Die Erfindung betrifft ferner ein Verfahren zur Herstellung der Mehrschichtfolie sowie deren Verwendung.

Mehrschichtfolien finden seit vielen Jahren eine breite Anwendung. So werden Mehrschichtfolien beispielsweise in der Lebensmittelindustrie zum Verpacken von Lebensmitteln verwendet. Aber auch im medizinischen Bereich finden Mehrschichtfolien seit langem Anwendung, beispielsweise zur Herstellung von medizinischen Beuteln.

Die Mehrschichtfolien für diese Beutel wurden bisher in den meisten Fällen aus Polyvinylchlorid (PVC) hergestellt. Die Verwendung von Polyvinylchlorid weist jedoch einige Nachteile auf. So besteht zum einen die Gefahr, daß in der PVC-Folie enthaltene Weichmacher freigesetzt werden, und - im Fall der Verwendung der Folien in medizinischen Beuteln - beispielsweise in die darin enthaltene medizinische Lösung diffundieren können. Darüber hinaus ergibt sich das Problem, daß beim Versiegeln in der Hitze Salzsäure gebildet wird. Außerdem neigt PVC zur Medikamentenabsorption bei Infusionslösungen.

Aufgrund dieser Nachteile werden zunehmend andere Materialien für Mehrschichtfolien eingesetzt.

Zum diesbezüglichen Stand der Technik werden die

EP-A-0 179 639 = D1,
EP-A-0 474 376 = D2 und die
US-A-4,643,926 = D3 genannt.

So wird in der EP-A-0 179 639 eine Mehrschichtfolie beschrieben, die beispielsweise zwei äußere Schichten und eine innere Schicht aufweist, wobei die äußeren Schichten jeweils ein Blend von mindestens einem Polymer auf Propylenbasis und mindestens einem linear Low Density Polyethylen (LDPE) sind, und die innere Schicht mindestens ein Polymer, das eine hohe Gasbarriere aufweist, enthält. Als Polymer mit einer hohen Gasbarriere wird beispielsweise ein Ethylen-Vinylalkohol-Copolymer (EVOH) eingesetzt.

Bei den aus D1 bekannten Mehrschichtfolien ist nachteilig, daß es durch den Gehalt an LDPE im Blend der Außenschicht zu einer mangelnden Temperaturbeständigkeit unter den Bedingungen einer Sterilisationsbehandlung kommen kann. Außerdem ist bei der aus der D1 bekannten Folie mit einer Gasbarriere-Mittelschicht (d.h. E > 2000) von einer nicht ausreichenden Schlagzähigkeit auszugehen.

Eine Mehrschichtfolie mit insgesamt 5 bzw. 7 Schichten wird in der D2 offenbart. Diese Mehrschichtfolie weist eine Innenschicht sowie zwei Außenschichten auf. Zwischen den Außenschichten und der Innenschicht können jeweils noch ein bis zwei Schichten angeordnet sein. Die Innenschicht weist ein Blend aus a) einem Propylen-Homopolymer oder Copolymer und b) einem Ethylen-Copolymer oder Polybuten auf. Die beiden Außenschichten sind siegelbar und enthalten einen Weichmacher. Als Material für die Außenschichten werden unter anderem Styrol-Butadien-Copolymere eingesetzt. Bei der Mehrschichtfolie gemäß der D2 liegt zum einen ein symmetrischer Aufbau vor, mit zwei Siegelschichten. Zum anderen wird für die beiden Styrol-Butadien-Copolymeren ein Weichmacher benötigt und außerdem haben die Außenschichten der Folie gemäß D2 keinen definierten Erweichungspunkt. Daneben fehlt gemäß D2 eine als Stützschicht wirkende Schicht. Insgesamt weist die Folie der D2 damit einen eher ungünstigen Aufbau auf, der vor allem 1) zu einer schlechten Transparenz, 2) einem Verkleben der äußeren Schichten, beispielsweise mit einem medizinischen Beutel unter Bedingungen der Sterilisation, 3) zu einem aufgrund des symmetrischen Aufbaus sich deutlich aufwendig gestaltenden Siegelprozeß, 4) zu einer bei 121°C nicht ausreichenden Kraftaufnahme der Folie und schließlich 5) aufgrund der Materialzusammenstellung zu Entsorgungsproblemen führen kann.

Eine Mehrschichtfolie wird ebenfalls in der US-A-4,643,926 offenbart. Die Schichtfolien der D3 weisen dabei eine Siegelschicht aus Ethylen-Propylen-Copolymer, modifiziertem Ethylen-Propylen-Copolymer oder flexiblem Copolyester auf, eine oder mehrere Innenschichten, die elastische polymere Materialien einschließen und eine äußere Schicht aus Ethylen-Propylen-Copolymer oder einem flexiblen Copolyester. Den inneren Folienschichten (Mittelschicht oder innere Schichten) mangelt es dabei an einer Stützschicht, so daß die Innen- oder Mittelschicht(en) der Mehrschichtfolie beim Siegeln fließen. Zusätzlich ist nach heutigem Erkenntnisstand für die offenbarten Materialkombinationen für die Schichten die Anwesenheit von wenigstens einer Haftvermittlungsschicht notwendig. Hierfür kommt z.B. ein Ethylen-Methacrylat-Copolymeres (EMA) oder ein Ethylen-Vinylacetat-Copolymer (EVA) in Frage, was aber wiederum nachteilig dazu führt, daß die Folie ohne Strahlenvernetzung nicht Hitze sterilisierbar ist. Letztlich läßt auch die gemäß der D3 offenbarte Materialauswahl vermuten, daß es zu Entsorgungsproblemen mit gebrauchten Folien kommen kann.

Darüber hinaus ist aus EP-A-0 564 206 ein Behälter bekannt, der eine Mehrschichtstruktur aufweist. Allerdings weist dieser Behälter keine Schicht aus Polymeren auf, deren Erweichungstemperatur nach Vicat kleiner als 70 °C ist.

Die Druckschrift DE-A-39 23 464 beschreibt wärmeschrumpfbare Verbundfolien. Da diese Folien bei einer Hitzesterilisation schrumpfen, sind sie zur Herstellung von medizinischen Mehrkammerbeuteln nicht geeignet.

Aus US-A-4,778,697 sind Mehrschichtfolien bekannt, die entweder Polypropylen oder Polyethylen sowie weitere Komponenten enthalten, die Elastizität zur Verfügung stellen. Hierbei wird keine Schicht aus Polymeren offenbart, deren Erweichungstemperatur nach Vicat kleiner als 70 °C ist.

Die Druckschrift EP-A-0 282 282 offenbart wärmeschrumpfbare Mehrschichtfolien, deren Mittelschicht eine Erweichungstemperatur im Bereich von 80 °C bis 115 °C aufweist. Eine derartige Folie ist nicht zur Herstellung von medizinischen Mehrkammerbeuteln geeignet.

Angesichts des hierin aufgezeigten Standes der Technik und den mit diesem Stand der Technik verbundenen Nachteilen war es mithin Aufgabe der Erfindung, eine schlagzähe, hitzesterilisierbare, flexible und möglichst transparente Folie zur Verfügung zu stellen, die frei von PVC und Weichmachern sein soll, möglichst weitgehend aus leicht entsorgbaren Materialien bestehen soll und die außerdem die Fertigung von medizinischen Beuteln oder Mehrkammerbeuteln und dergleichen gestattet, die also vor allem auch nach einer Sterilisationsbehandlung noch eine hohe Schlagzähigkeit aufweist.

Aufgabe der Erfindung ist auch die Angabe eines Verfahrens zur Herstellung einer solchen Mehrschichtfolie sowie die Verwendung der Folie.

Gelöst werden die vorstehend genannten Aufgaben sowie weitere nicht näher angegebene Aufgaben durch eine non-PVC-Mehrschichtfolie der eingangs erwähnten Gattung mit den Merkmalen des kennzeichnenden Teils des Anspruchs **1**. Vorteilhafte Ausführungsformen sind Gegenstand der auf Anspruch **1** rückbezogenen Unteransprüche, während Anspruch **13** eine Lösung des der Erfindung zugrundeliegenden Problems im verfahrensmäßiger Hinsicht angibt. Die Verwendung der erfindungsgemäßen non-PVC-Mehrschichtfolien wird in Ansprüchen **15** und **16** unter Schutz gestellt.

Dadurch, daß bei einer PVC-freien, bei mindestens 121°C hitzesterilisierbaren Mehrschichtfolie (1), die eine Außenschicht (2), eine Stützschicht (4) sowie mindestens eine dazwischen angeordnete Mittelschicht (3) aufweist, die Außen- (2) und Stützschicht (4) jeweils bei Temperaturen oberhalb von 121°C schmelzen und Polymere aufweisen, deren Erweichungstemperaturen nach Vicat VST/A/50 gemäß ASTM D1525 oberhalb von 121 °C liegen und mindestens eine Mittelschicht (3) aus Polyethylencopolymer, wobei das Polyethylen-Copolymer ein Polyolefin ist, Polypropylencopolymer, Polypropylen-Homopolymer oder-Copolymer mit jeweils $\rho$ < 0,9 g/cm$^3$, Low-Density-Polyethylen (LDPE), Styrol-Ethylen/Butylen-Styrol-Blockcopolymer, Styrol-Ethylen/Propylen-Styrol-Blockcopolymer, SIS, Polyisobutylen (PIB) und/oder Blends der genannten Polymere untereinander oder mit Polypropylen ($\rho \geq$ 0,9 g/cm$^3$) und/oder Polyethylen besteht, deren Erweichungspunkt nach Vicat VST/A/50 gemäß ASTM D1525 unterhalb von 70°C liegen, gelingt es, eine hervorragend für Anwendungen im medizinischen Bereich, vor allem für den Kontakt mit medizinischen Lösungen oder Körperflüssigkeiten geeignete Mehrschichtfolie bereitstellen, die des weiteren autoklavierbar, flexibel und optisch klar ist. Darüber hinaus sind die erfindungsgemäßen Folien nicht oder nur wenig durchlässig für Wasserdampf und schließlich verfügt die erfindungsgemäße PVC-freie Mehrschichtfolie über hervorragende Schweiß- und Siegeleigenschaften, was ihre Eignung zur Herstellung von medizinischen Beuteln hervorhebt. Außerdem erweist sie eine ausgesprochen hohe Schlagzähigkeit zur Aufnahme von Energie bei Stoßbelastung ohne Zerstörung auf.

Gemäß der Erfindung verfügt demnach eine non-PVC-Mehrschichtfolie essentiell über wenigstens drei Schichten, die alle bestimmte Funktionen erfüllen. Kern des erfindungsgemäßen Mehrschichtaufbaus ist dabei eine innenliegende Schicht, die weiter oben im Text auch als Mittelschicht bezeichnet wurde, welche der fertigen Folie eine hohe Flexibilität verleiht. Entsprechend ihrer Funktion kann die Mittelschicht somit auch als Flexibilitätsschicht bezeichnet werden. Die wenigstens eine Mittelschicht gemäß der Erfindung wird dabei im Rahmen der Erfindung notwendig von zwei Nachbarschichten begrenzt, auf jeder Seite also wenigsten eine, und ist somit zwischen zwei äußeren Schichten angeordnet.

Die Erweichungstemperatur wird für die Polymer- und Kunststoffmaterialien der Erfindung nach Vicat VST/A/50 bestimmt, d.h. sie ist als diejenige Temperatur definiert, bei der in eine zunehmend erwärmte Kunststoffprobe ein definiert, nach Methode A mit 10 N belasteter Stahlstift von 1 mm$^2$ Querschnitt 1 mm tief eingedrungen ist (alt: DIN 53460, neu: DIN-Iso-Norm 306, ASTM D1525). Die Erweichungstemperatur liegt meist wesentlich niedriger als diejenige Temperatur, bei der die polymere Substanz vollständig einen quasi flüssigen Zustand erreichen würde. So kommt es während des Erhitzens erfindungsgemäß verwendeter teilkristalliner Polymere zu einem beginnenden Fließen der amorphen Bereiche, während die kristallinen Bereiche die Struktur aufrechterhalten.

Dabei ist davon auszugehen, daß in der Regel durch die Polymere mit Erweichungstemperaturen von weniger als etwa 70°C der Mittelschicht hinsichtlich ihres Schmelzverhaltens die Eigenschaft verliehen wird, daß diese bei Temperaturen < 121°C schmilzt. Hierbei ist unter Schmelzen nicht zu verstehen, daß die Mittelschicht vollständig in den flüssigen Aggregatszustand übergeht, vielmehr handelt es sich dabei im wesentlichen um ein Angelieren der Mittelschicht bei Temperaturen um 121°C, wobei genügend Bereiche der Mittelschicht im festen Aggregatszustand verbleiben und eine Restformstabilität bei hervorragender Flexibilität der gesamten Folie bedingen.

Die die Mittelschicht begrenzenden Schichten, nämlich die Außenschicht und die Stützschicht können verschieden oder gleich sein. Wesentlich ist im Rahmen der Erfindung jedoch, daß sie Polymere aufweisen, deren Erweichungstemperaturen oberhalb von etwa 121°C liegen, wodurch der jeweiligen Schicht in der Regel hinsichtlich der Schmelzeigenschaft ein Verhalten verliehen wird, das als hoch schmelzend, also im erfindungsgemäßen Sinn als Schmelzen bei Temperaturen von > 121°C bezeichnet werden kann. Bezüglich ihrer Funktion dienen beide Schichten gemäß der Erfindung zur Stütze und Stabilisierung der innenliegenden Mittelschicht.

Obwohl sich durch die Kombination von 3 Schichten (Stützschicht, Mittelschicht und Außenschicht) bereits eine Non-PVC-Mehrschichtfolie mit hohem Gebrauchswert ergibt, kann in erfindungsgemäßer Weiterbildung die Mittelschicht mindestens 2 Schichten mit niedriger Erweichungstemperatur aufweisen, wobei die Schichten mit niedrigen Erweichungstemperaturen Polymere enthalten, deren Erweichungstemperaturen unterhalb von etwa 70°C liegen. Diese sind durch eine Schicht mit hoher Erweichungstemperatur getrennt, die Polymere enthält, deren Erweichungstemperaturen oberhalb von etwa 121°C liegen, wobei die Schichten niedriger und hoher Erweichungstemperatur jeweils alternierend angeordnet sind. D.h. die innenliegende Mittelschicht kann in mehrere Stütz- und Mittelschichten gegliedert sein, so daß die non-PVC-Mehrschichtfolie der Erfindung mindestens dreilagig ist, aber auch 5-, 7- usw. lagig sein kann. Durch diese Mehrlagigkeit der Mittelschicht wird nicht vom Grundgedanken der Erfindung abgewichen, vielmehr wird die Flexibilität der gesamten Folie durch Gliederung der Mittelschicht im gesamten strukturellen Aufbau deutlich verbessert. Dabei können beim 5- oder 7lagigen Aufbau die drei bzw. fünf inneren Schichten beispielsweise zwei bzw. drei Schichten mit Polymeren aufweisen, die den sie enthaltenden Schichten insgesamt eine Erweichungstemperatur von < 121°C verleihen, während im ersten Fall zwischen den beiden Mittelschichten eine Schicht mit einem oder mehreren Polymeren mit Erweichungstemperaturen von > 121°C und im zweiten Fall zwei solcher Schichten zur Stütze zwischen den drei Mittelschichten angeordnet sind.

In jedem der Fälle wird also gewährleistet, daß eine Mittelschicht immer von Schichten benachbart wird, deren Erweichungstemperatur > 121°C ist oder die Polymere enthalten mit einer Erweichungstemperatur nach Vicat von > 121°C (VST/A/50(10N).

Die Dicke der einzelnen Schichten der erfindungsgemäßen non-PVC-Mehrschichtfolie ist an sich nicht besonders kritisch. Erfindungsgemäß ist es jedoch bevorzugt, daß die Mittelschicht mindestens 90 $\mu$m und die Außensowie Stützschicht jeweils 10-20 $\mu$m dick sind. Trotz ihrer relativ geringen Dicke ermöglichen somit Außen- und Stützschicht aufgrund ihrer Stützeigenschaften besonders vorteilhaft, daß ein Verformen der relativ flexiblen und dicken Mittelschicht aufgrund der erhöhten Fließfähigkeit der Mittelschicht bei Hitzeeinwirkung weitestgehend vermieden wird.

Wenn die Mehrschichtfolie vom 3lagigen Grundaufbau etwa zu einem 5-oder 7lagigen Aufbau übergeht, kann bei den einzelnen Lagen grundsätzlich an den für den 3lagigen Aufbau genannten Werten festgehalten werden. Es ist jedoch genauso gut möglich und meist bevorzugt, die Dicke der einzelnen am Aufbau der Mittelschicht beteiligten Schichten entsprechend dünner auszuführen, um die Gesamtdicke der drei oder fünf "mittleren Schichten" etwa im Bereich von ca. 100 $\mu$m zu halten.

In weiterhin zweckmäßiger Ausgestaltung weist die non-PVC-Mehrschichtfolie gemäß der Erfindung zusätzlich noch eine Siegelschicht auf. Diese ist als äußerste Schicht bevorzugt auf der äußeren Stützschicht angeordnet. Hierdurch wird in vorteilhafter Weise die Verschweißung der Mehrschichtfolie der Erfindung an dieser Seite möglich. Für die Siegelschicht setzt man im allgemeinen Polymere ein, die lösungsverträglich sind, da die Siegelschicht bei einem aus der erfindungsgemäßen non-PVC-Mehrschichtfolie hergestellten Beutel nach Fertigstellung des Beutels im Innenbereich liegt. Weiterhin sollen die Polymere sehr siegelfreudig sein, damit eine gute und feste Schweißnaht hergestellt werden kann. Dabei wird also ein 4-, 6-, 8-usw. lagiger Aufbau realisiert, wobei eine asymmetrische Folie resultiert.

In bevorzugter Ausführungsform weist die Siegelschicht Polymere auf, deren Erweichungstemperatur unterhalb der Erweichungstemperaturen der Außenschicht, der Stützschicht sowie der mindestens einen Schicht mit hoher Erweichungstemperatur liegt, die zwischen "zwei Mittelschichten" angeordnet ist. Zweckmäßig ist die Siegelschicht 15-30 $\mu$m dick. Gleichzeitig ist es von Vorteil für die Erfindung, wenn das Kunststoffmaterial der Siegelschicht eine Erweichungstemperatur von > 121°C aufweist. Dabei ist vor allem zu beachten, daß die Siegelschicht zur Erreichung der gewünschten Eigenschaften durchaus Anteile von Kautschuk aufweisen kann. Die Siegelschicht wird bevorzugt durch mindestens 15% synthetischen Kautschuk schlagzäh modifziert. In jedem Fall ist es aber vorteilhaft, wenn das Kunststoffmaterial für die Siegelschicht so gewählt ist, daß das Material der Schicht unter den Bedingungen der Dampfsterilisation, also bei ca. 121°C, formstabil bleibt.

Wie bereits eingangs erwähnt, orientiert sich die Auswahl der Materialien für alle Schichten einer erfindungsgemäßen non-PVC-Mehrschichtfolie wesentlich an den Erweichungstemperaturen der in den aus Kunststoffmaterialien gebildeten Einzelschichten enthaltenen Polymeren.

An dieser Stelle sei darauf hingewiesen, daß für die Erfindung unter "Kunststoffmaterial" solche Materialien verstanden werden, deren wesentliche Bestandteile aus makromolekularen organischen Verbindungen bestehen, wobei die Kunststoffmaterialien auch als Polymere bezeichnet werden, wozu insbesondere Homopolymere als auch Copolymere (statistische, Block- und/oder Propfpolymere) sowie Mischungen (= Blends) aus den vorgenannten Stoffen gehören.

Neben den Erweichungstemperaturen der Polymeren und damit der Kunststoffmaterialien der einzelnen Schichten spielt auch die Umweltverträglichkeit der für die einzelnen Schichten zum Einsatz gelangenden Materialien eine wichtige Rolle für die Erfindung.

So waren früher verwendete Materialien, wie vor allem PVC, aufgrund der Umweltproblematik (HCl, Dioxin, Furan), der Freisetzung zugesetzter Weichmacher und einer mangelnden Recyclingfähigkeit gleich mehrfach mit Nachteilen behaftet.

Eine ganz besonders bevorzugte Ausführungsform der erfindungsgemäßen non-PVC-Mehrschichtfolie ist nun dadurch gekennzeichnet, daß alle Schichten, die am Aufbau der Folie beteiligt sind, als wesentlichen Bestandteile Polyolefin-Homopolymere und/oder Polyolefin-Copolymere enthalten, die α-olefinisch verknüpft sind. Durch Verwendung solcher Materialien wird mit der Erfindung eine vollständig für medizinische Zwecke taugliche und dennoch absolut umweltverträgliche, da recyclingfähige Mehrschichtfolie geschaffen.

Während bekannte Polyolefinfolien hinsichtlich Ihrer Flexibilität oder Klarheit den geltenden Anforderungen nicht genügen konnten, werden all diese Kriterien erfindungsgemäß erfüllt.

Unter den Materialien, die für die Außenschicht in Frage kommen, sind die dem Fachmann geläufigen Polymeren oder Polymermischungen zu nennen, deren Erweichungstemperatur höher als die der Polymeren oder Polymermischungen der anderen Schichten ist oder gleich mit der Erweichungstemperatur des Polymeren oder der Polymermischungen der Stützschicht(en).

Hierzu gehören bevorzugt Polypropylen-Homopolymere, Polypropylen-Blockcopolymere, Polypropylen-Randomcopolymere mit niedrigem bis mittleren Ethylengehalt und/oder High-Density-Polyethylen (HDPE). Besonders bevorzugt sind Polypropylen-Randomcopolymere. Die genannten Polymere können allein oder in Form von Mischungen, sog. Blends, eingesetzt werden.

Für die Mittelschicht oder die mindestens eine Schicht mit niedriger Erweichungstemperatur der Mittelschichten kommen vor allem Polyethylen-Copolymere, Polypropylen-Homopolymere oder Copolymere mit $\varrho$ < 0,9 g/cm$^3$, Low-Density-Polyethylen (LDPE), Styrol-Ethylen/Butylen-Styrol-Blockcopolymere, Styrol-Ethylen/Propylen-Styrol-Blockcopolymere, SIS (Styrol-Isopren-Styrol), Polyisobutylene (PIBs) und/oder Blends der genannten Polymere mit Polypropylen mit $\varrho \geq 0,9$ g/cm$^3$ und/oder Polyethylen in Frage.

Die Stützschicht und/oder die mindestens eine Schicht mit hoher Erweichungstemperatur bestehen vorteilhaft aus einem Polypropylen-Homopolymer, einem Polypropylen-Copolymer, einem High-Density-Polyethylen (HDPE) oder einem Linear Low-Density-Polyethylen (LLDPE) und/oder Blends der genannten Polymere.

Für die Siegelschicht kommen vor allem Materialien in Frage, wie Polypropylen-Copolymere, High-Density-Polyethylene (HDPEs), Linear Low-Density-Polyethylene (LLDPE) und/oder Blends der genannten Polymere mit einem Styrol-Ethylen/Butylen-Styrol-Blockcopolymer, einem Styrol-Ethylen/Propylen-Styrol-Blockcopolymer, SIS (Styrol-Isopren-Styrol-Blockcopolymere) und/oder einem α-Olefincopolymer, vorzugsweise aus einem Blend aus einem Polypropylen-Randomcopolymer und einem synthetischen Kautschuk.

Die Polymermaterialien für die einzelnen Schichten sind, wie bereits angeführt, bevorzugt Polyolefine. Dabei zeichnet sich die Mehrschichtfolie gemäß der Erfindung ganz besonders bevorzugt dadurch aus, daß sie im wesentlichen frei von Gleitmitteln, Weichmachern, Antiblockmitteln, Antistatika sowie anderen Füllstoffen sein kann. Dabei ist besonders hervorzuheben, daß zwischen den einzelnen Schichten aus den verschiedenen Materialien grundsätzlich von einer ausreichenden Haftung ausgegangen werden kann. Die Haftung zwischen den Schichten kann jedoch in vorteilhafter Weise dadurch gesteigert werden, daß die einzelnen Schichten jeweils zusätzlich bis zu 70 Gew.-%, bezogen auf 100 Gew.-% ihrer Zusammensetzung, derjenigen Kunststoffmaterialien aufweisen, welche zur Ausbildung einer oder beider benachbarten Schichten der non-PVC-Mehrschichtfolie dienen.

Durch diese "Materialvermittlung" bzw. die Substitution von Material wird die Kompatibilität der miteinander zu einer Folie geformten Schichten deutlich gesteigert, ohne die sonstigen Eigenschaften in Frage zu stellen. Insbesondere gelingt es durch dieses "Einblenden", eine gute Verbindung der Schichten untereinander herzustellen, ohne daß ein Haftvermittler nötig wäre.

Die non-PVC-Mehrschichtfolie der Erfindung kann prinzipiell nach dem Fachmann geläufigen Formverfahren ausgestaltet sein. Erfindungsgemäß ist die Ausführung als Flach- oder Schlauch- (Blas-)folie bevorzugt.

Gegenstand der Erfindung ist auch ein Verfahren zur Herstellung der non-PVC-Mehrschichtfolie, das dadurch gekennzeichnet ist, daß die einzelnen Schichten zum Erhalt der non-PVC-Mehrschichtfolie miteinander coextrudiert werden. Wichtig für die Erfindung ist dabei, daß es durch die Coextrusion mehrerer Schichten miteinander gelingt, mehrere gewünschte Eigenschaften in einer Folie zu vereinigen, um dabei die Qualität des erhaltenen Produktes zu steigern.

Hierfür bietet sich gerade im Coextrusionsverfahren die Möglichkeit unter geeigneter Auswahl der Extrusionspartner eine maßgeschneiderte Mehrschichtfolie zur Verfügung zu stellen, die es auf einzigartige Weise gestattet, auf jeglichen Zusatz von Haftvermittlern zu verzichten und dennoch die geforderten Eigenschaften und zusätzlich darüber hinaus andere wichtige Eigenschaften, wie Gas- und Wasserdampfdurchlässigkeit, Festigkeit des Materials, Schweißbarkeit, Transparenz und Temperaturbeständigkeit, zu beeinflussen.

Die Coextrusion von Materialien der erfindungsgemäßen Schichten ist zwar grundsätzlich bekannt, es ist jedoch aufgrund vorhandener Erfahrungen nicht ohne weiteres die erfolgreiche Realisierung einer so komplexen Mehrschichtfolie, wie der erfindungsgemäßen, vorhersehbar gewesen. Insofern war der erfindungsgemäße Erfolg überraschend, da sich in der Praxis sonst immer wieder zeigte, daß selbst bei Zuhilfenahme von ggf. tabellierten Eigenschaften von Polymeren, etwa Daten zur Verbundhaftung, der Einsatz solcher Materialien nicht notwendigerweise zum Erfolg führt. D.h., die Lösung einer gestellten Aufgabe durch reine Auswahl aus bekannten Materialien ist bei einer mehrschichtigen Coextrusionsfolie grundsätzlich nicht ohne weiteres möglich.

Weiterhin ist es beim erfindungsgemäßen Verfahren möglich, daß die Folie nach der eigentlichen Formung auf übliche Arten weiterverarbeitet wird. So kann sie z.B. gereckt werden. Bevorzugt wird sie jedoch nach dem Formen mit Wasser schockgekühlt. Hierdurch wird ein optimaler Verbund mit hoher Flexibilität und ausreichender Zähigkeit erreicht, aber vor allem wird durch das schockartige Kühlen der Folie die Transparenz der Folie verbessert, weil die Auskristallisation der am Aufbau der Folie beteiligten Polymeren beim langsamen Abkühlen verhindert wird. Dies führt zu einem geringen Kristallinitätsgrad und damit zur hohen Transparenz und Zähigkeit.

Die erfindungsgemäße non-PVC-Mehrschichtfolie eignet sich hervorragend für eine Verwendung im medizinischen Bereich. Die Materialien der einzelnen Schichten der Mehrschichtfolie sind alle so ausgewählt, daß die Folie durchsichtig und flexibel, insbesondere aber auch heiß sterilisierbar verschmelz- und versiegelbar ist. Die Verwendung von PVC, welches immer einen Anteil an Weichmachern enthält, wird vermieden, ebenso werden keine Haftvermittler benötigt, die ggf. durch die Kunststoffmaterialschichten hindurchdiffundieren könnten, was bei einer Verwendung im medizinischen Bereich besonders unerwünscht ist.

Aufgrund seiner hervorragenden Material- und Gebrauchseigenschaften wird die erfindungsgemäße non-PVC-Mehrschichtfolie mit besonders großem Vorteil zur Herstellung von medizinischen Beuteln oder medizinischen Mehrkammerbeuteln verwendet.

Im folgenden wird die Erfindung unter Bezugnahme auf die beigefügten Figuren eingehender erläutert.

In den Figuren zeigen:

Fig. 1 einen schematischen Querschnitt durch eine erste Ausführungsform der erfindungsgemäßen non-PVC-Mehrschichtfolie mit Siegelschicht.

Fig. 2 einen schematischen Querschnitt durch eine zweite Ausführungsform der erfindungsgemäßen non-PVC-Mehrschichtfolie, wobei zur Vereinfachung nur der Aufbau der Schicht 3 aus Fig. 1 bei ansonsten unverändertem Aufbau dargestellt ist.

Fig. 3 einen schematischen Querschnitt durch eine dritte Ausführungsform der erfindungsgemäßen non-PVC-Mehrschichtfolie, wobei zur Vereinfachung auch hier die Außen-, Stütz- und Siegelschicht aus Fig. 1 weggelassen sind; und

Fig. 4 einen schematischen Querschnitt durch eine vierte Ausführungsform der erfindungsgemäßen non-PVC-Mehrschichtfolie, wobei auch hier wiederum nur die Mittelschicht 3 entsprechend Fig. 1 vergrößert dargestellt wird und die Außenschicht sowie die Stütz- und Siegelschicht zur Vereinfachung weggelassen sind.

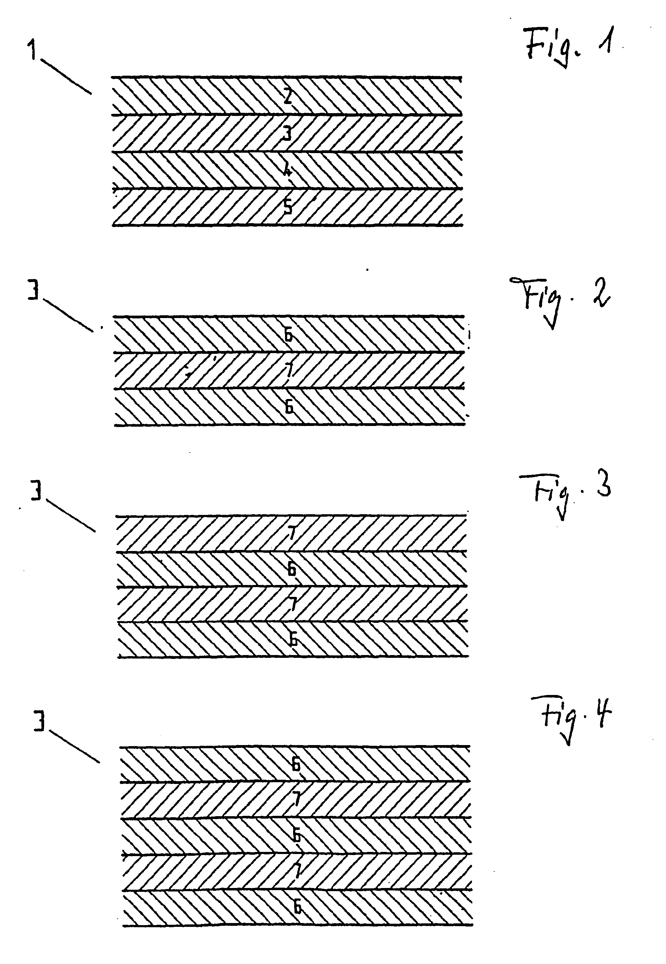

In Fig. 1 ist eine erste Ausführungsform einer erfindungsgemäßen non-PVC-Mehrschichtfolie 1 im Querschnitt dargestellt. Die Folie wurde durch Coextrusion hergestellt, und es sind insgesamt vier Schichten 2, 3, 4 und 5 zu erkennen. Bei der Schicht 2 handelt es sich um die Außenschicht, bei der Schicht 3 um die Mittelschicht, Schicht 4 ist eine Stützschicht und Schicht 5 eine Siegelschicht.

Die Mittelschicht 3 kann erfindungsgemäß in mehrere Schichten 6 und 7 geteilt sein. Dies ist am besten in den Fig. 2-4 zu erkennen, die in Vergrößerung aus Fig. 1 die Mittelschicht unter Weglassung der Schichten 2, 4 und 5 darstellen. Die Schichten 4 und 7 können den gleichen polymeren Aufbau haben.

Die Außenschicht 2 besteht üblicherweise aus einem Polymer oder einer Polymermischung, deren Schmelzpunkt höher als der Schmelzpunkt der Polmyere oder Polymermischungen der anderen Schichten oder gleich mit dem Schmelzpunkt des Polymers oder Polymermischung der Stützschicht 4 liegt. Das Polymer oder die Polymermischung der Außenschicht 2 richtet sich in der Regel nach der Schweißtemperatur der Siegelschicht 5, so daß bei Kontakt der Außenschicht und dem Schweißwerkzeug ein Aufschmelzen oder Kleben der Außenschicht 2 stattfindet.

Die Mittelschicht 3 ist vorzugsweise eine weiche oder flexible Schicht, die einen Erweichungspunkt bzw. von der Bestandteile eines Erweichungspunkts unterhalb der Sterilisationstemperatur von 121°C hat und die durch eine oder mehrere Schichten 7 in gleiche oder unterschiedliche Schichten 6 geteilt sein kann. Die Schichten 7 bestehen aus Polymeren oder enthalten Polymere, deren Schmelzpunkte deutlich über 121°C liegen. Bei der Sterilisation bilden die Schichten 7 mit der Außenschicht 2 und Stützschicht 4 eine Matrix, die ein Fließen der Schichten 6 verhindert. Die Schichten 6, 7 und 4 können ebenfalls Eigenschaften haben, die eine Verbindung zur Nachbarschicht begünstigen.

Die Stützschicht 4 erfüllt die Aufgabe einer Fließbarriere beim Schweißvorgang. Sie besteht üblicherweise aus Polymeren oder Polymermischungen mit einem Erweichungspunkt über der entsprechenden Schweißtemperatur.

Die Siegelschicht 5 besteht üblicherweise aus einem siegelfreudigen Polymer oder Polymermischungen, welche entsprechende Eignung für den Kontakt mit Lebensmittel, enteralen oder parenteralen Lösungen aufweisen.

Ergebnisse von Testversuchen

A) Eine beispielhafte erfindungsgemäße Folie läßt sich u.a. durch Auswahl und Coexttrusion folgender Materialien mit den folgenden Eigenschaften realisieren:

a) Außenschicht 2
Novolen 1302 L (ataktisches Polypropylen-Homopolymer mit einer Vicat A von 138°C), Novolen 1102 H (isotaktisches Polypropylen-Homopolymer mit einer Vicat A von 154°C), PP 23 M 10 cs 259 (Polypropylen-Random-Copolymer mit einer Vicat A von 135°C);

b) Mittelschicht 3
Teamex 1000 F (VLDPE mit Vicat A = 66°C), Exxact 4024 (Polyethylen-Copolymer mit Vicat A = 70°C), Adflex 7029 XCP (Polypropylen-Copolymer mit Vicat A = 55°C)

c) Stützschicht 4 wie a)

d) Siegelschicht 5
Novolen 3200 HX (Polypropylen-Random-Copolymer mit Vicat A = 130°C).

B) In einem weiteren Versuch wurde die Schlagzähigkeit einer erfindungsgemäßen non-PVC-Mehrschichtfolie mittels Falltest untersucht. Anhand eines Beispiels wird dargestellt, wie sich eine erfindungsgemäße schlagzähe Mehrschichtfolie vor und nach Heißdampfsterilisation, im Fallversuch aus 1 bzw. 2 m Höhe verhält.
Bei der Versuchsprobe handelt es sich um eine coextrudierte Mehrschichtfolie, die sich in ihrem strukturellen Aufbau wie folgt darstellt:

Siebenschichtverbund gemäß Fig. 1 und 3 mit

PP-H als Außenschicht 2;
PE-C/PP-Blend als Schicht 6;
PE-C gemäß Schicht 7;
PP-H als Stützschicht 4
PP-R/SEBS-Blend als Siegelschicht 5

Die prozentualen Mengenanteile (Gew.-%) der gesamten Folie sind wie folgt:

28 % PP-H
60 % PE/PP-Blend
12 % schlagzähmodifiziertes PP-R.

Die Materialabkürzungen bedeuten im einzelnen:

PP-H,R:    Polypropylen-Homopolymer, Randomcopolymer
SEBS:      Styrol-Ethylen-butylen-Styrol Blockcopolymer
PE-C:      Polyethylen-Copolymer

Die Folie wurde coextrudiert und steht gewickelt als Schlauchfolie, mit einer Liegebreite von 180 mm und einer Foliendicke von 140-150 $\mu$m zur Verfügung.
Die Folie wird im Fertigungsprozeß leicht biaxial orientiert mit einem Streckverhältnis von : Längstreckung/Querstreckung = 2,3/1,4.
Damit sind erfindungsgemäße Folien sowie Materialien für erfindungsgemäße Folien deutlich von den aus dem Stand der Technik bekannten Materialen verschieden. Das z.B. in der D3 beschriebene LLDPE ist geeignet für Wärmeschrumpffolien. LLPDE ist ein lineares Polymer. An eine lineare Kette sind höchstens $C_8$-Reste copolymerisiert. LLPDE führt daher zu orientierten Folien. In der Regel sind diese mehr als vierzigfach gestreckt und haben daher die Eigenschaft, bei Wärmebehandlung entgegen ihrer Streckrichtung zu schrumpfen. Diese Eigenschaft zeigt eine erfindungsgemäß einsetzbare Folie nicht. Diese kann zwar auch leicht orientiert (4 : 1) sein, aber nicht gestreckt (>40 : 1). Somit ist sie nicht linear orientiert und zeigt keine Schrumpfeigenschaft.

Die Schlauchfolienprobe wird auf entsprechende Längen zurechtgeschnitten und mittels indirektem Wärmekontaktschweißens oder Laserschweißen (Schweißart ist nicht kritisch) zu einem Beutel mit zwei flexiblen Schlauchanschlüssen unlösbar miteinander verschweißt und anschließend mit Wasser, als inkompressiblem Füllgut befüllt, so daß sich jeweils gleiche Füllmengen ergeben. Die beiden Schlauchanschlüsse werden mit steckbaren Konnektoren dicht verschlossen. In vorhergehenden Versuchen sind für die einzelnen Versuchsproben die optimalen Parameter, wie Temperatur, Zeit, Flächenpressung, zur Verschweißung ermittelt worden. Sie sind in nachfolgender Tabelle aufgeführt:

| Temperatur | Zeit [s] | | Flächenpressung [N/m²] | | Füllmenge Wasser [l] |
|---|---|---|---|---|---|
| | a | b | a | b | |
| 130 | 6 | 8 | 8 | 9 | 2 |

Die Folie wird durch 2 Schweißbalken, die mit Widerstandsheizpatronen beheizt werden, in einer Schweißvorrichtung verschweißt.

> a) Schweißbalken gerade untere Naht
> b) Schweißbalken zum Einschweißen der Anschlußschläuche

Je zur Hälfte werden die fertigen Beutel sterilisiert bzw. nicht sterilisiert. Die Sterilisation erfolgt in einem Autoklaven, bei 121°C und 35 min, unter Naßdampf.

Die Fallvorrichtung gestattet es variabel, jede Höhe bis 2 m einzustellen. Sie besitzt eine pneumatisch betätigte Klappeneinheit, die zur Auflage der Beutel dient und bei Druckbeaufschlagung geöffnet wird. Die Beutel liegen bauchseitig auf, so daß der Aufprall in der ungünstigsten bauchseitigen Lage erfolgt.

Es zeigt sich, daß ein Einfluß der Sterilisation, etwa durch Abnahme der Schlagzähigkeit nicht bemerkbar ist. Auch eine Abnahme der Fallhäufigkeit ist nicht eingetreten. Lediglich der Bruch der Probe geschieht an verschiedenen Stellen. Während vor Sterilisation vorzugsweise die Folie Schädigung zeigt, so liegt nach Sterilisation die Schwachstelle in der Schweißnaht. Ein möglicher Grund für dieses Verhalten beruht auf dem ansteigenden Kristallisationsgrad sowie den sich ausbildenden sphärolithischen Überstrukturen mit den Folgen eines Zähigkeitsverlustes.

Die Siegelschicht ist bei der unters. Folie mit PP-R/SEBS-Blend schlagzäh modifiziert worden. Die Verbesserung der Schlagzähigkeit wird durch den Kautschukgehalt als diskontinuierliche Phase in einer PP-R Matrix erreicht. Die gute Verträglichkeit der beiden Blend-Komponenten vorausgesetzt, sind die Kautschukphasen in der Lage, in der spröden PP-R Matrix Spannungen aufzunehmen und für eine höhere Elastizität zu sorgen.

Der weitaus größere Aspekt bezüglich Fallfestigkeit kommt jedoch der Mittelschicht 3 zu. Eine ausreichende Nahtfestigkeit vorausgesetzt, muß die beim Aufprall in das Material eingeleitete Energie aufgenommen werden. Die getestete Folie besitzt als Mittelschicht einen hohen Anteil PE/PP-Blend. Die aufgenommene Energie läßt sich über den Energieerhaltungssatz bestimmen, woraus folgt:

$$W = m * g * (h_1 - h_2)$$

$h_1$ = Fallhöhe
$h_2$ = Rückprallhöhe
m = Beutelgewicht
g = Erdbeschleunigung

Zu berücksichtigen ist weiterhin, mit welcher Beanspruchungsgeschwindigkeit die Proben belastet werden, es folgt mit

$$v = \sqrt{2 * g * h_1}$$

(unter Vernachlässigung des Luftwiderstands) die Geschwindigkeit des Beutels vor dem Aufprall. Im Falltest verhalten sich die Versuchsproben teilelastisch mit einer Rückprallhöhe $h_2$ von 10-20 cm, so daß von einem teilelastischen Stoß auszugehen ist.

Die Beanspruchung bewirkt keinen Bruch der Proben. Aufgrund der hohen Beanspruchungsgeschwindigkeiten und der geringen Dehnung der Proben kann mit guter Sicherheit gesagt werden, daß die Belastung sich im energieelastischen Bereich (Hooke'schen Bereich) abspielt.

C) Des weiteren wurde an der unter B) hierin beschriebenen Folie auch die Schlagzugzähigkeit gemessen:

Die Messung der Schlagzugzähigkeit wurde mit einem Universal Pendelhammer des Typs 6545/023 der Firma Ceast (Torino/Italy) durchgeführt. Das Prinzip der Messung beruht auf der Umwandlung von potentieller in kinetische Energie. Ein Folienmuster (Abmessungen siehe unten) wird so eingespannt, daß der Pendelhammer beim Durchgang durch die Nullage schlagartig die Folie auf Zug beansprucht. Die Energie, die sich aus der Zerstörung der Folie ergibt, wird aus der Energiebilanz zwischen den potentiellen Energien vor und nach der Zerstörung der Probe errechnet, indem die Anfangsauslenkung h1 aus der Nullage des Pendels sowie die Endauslenkung h2, nach Bruch der Probe bestimmt wird.

Es gilt:

$$Epot1 = m * g * h1$$

$$Epot2 = m * g * h2$$

und daraus die Schädigungsenergie:

$$Es = Epot1 - Epot2$$

Die Messungen wurden mit einer Auslenkung von 90° aus der Nullage durchgeführt. Die potentielle Energie Epot1 betrug dabei immer 15 J. Das Gerät ist so ausgerüstet, daß nach Ende der Prüfung die Werte für die Schlagzugzähigkeit berechnet werden. Das verwendete Gerät wurde im einzelnen bei folgender Einstellung betrieben oder wies folgende Kenndaten auf:

DRWG Number (cod.): 6545/023
potentielle Energie: 15 J
gem. Gewicht bei 90°C: 2181,7-2203,6 g
Abstand zweichen Rotation und Schlag (Impact) Achsen: 373,8 $\pm$ 0,1 mm.
Zeit für 50 Oszill. weniger als 5° = 60,98-61,59 s

Die Schlagzugzähigkeit einer erfindungsgemäßen Folie (nicht sterilisiert, jeweils vier Proben a 0.15 mm zusammen eingespannt mit einer Dicke von 4 x 0,15 mm, einer Breite der Probenkörper von 4 mm und einem senkrechten Querschnitt von 0,6 mm$^2$), betrug 12 935,8 mJ/mm$^2$. Sterilisiert war der Wert für die Schlagzugzähigkeit bei 5 560,3 mJ/mm$^2$. (Dicke: 4 x 0,14 mm, Breite unverändert, Querschnitt: 0,56 mm$^2$).
Eine früher verwendete PVC-Folie weist üblicherweise eine Schlagzugzähigkeit im Bereich von 7150 mJ/mm$^2$ (nicht sterilisiert) oder 6973 mJ/mm$^2$ (sterilisiert) auf. Daraus folgt, daß bei der erfindungsgemäßen Folie alle Anforderungen an eine besonders hohe Schlagzugzähigkeit auch noch nach der Sterilisation erfüllt sind.
D) Bestimmung des Eindampfrückstandes gemäß DIN 58363 Teil 15 (Juli 1982)
Ein weiterer nicht unbedeutender Vorteil ist in der geringen Migration der Additive zu sehen. Der Additiv-Verlust beim Sterilisieren beträgt bei einer PVC-Folie 0.55 mg/dm$^2$, in der erfindungsgemäßen Folie dagegen jedoch nur 0.1 mg/dm$^2$ (bei 121°C) gemessen im Eindampfrückstand gemäß DIN 58363.
Weitere Vorteile und Ausführungsformen der Erfindung ergeben sich aus den nachfolgenden Patentansprüchen.

**Patentansprüche**

1.  PVC-freie, bei mindestens 121°C hitzesterilisierbare Mehrschichtfolie (1), aufweisend eine Außenschicht (2), eine Stützschicht (4) sowie mindestens eine dazwischen angeordnete Mittelschicht (3), **dadurch gekennzeichnet, dass** die Außen- (2) und Stützschicht (4) jeweils bei Temperaturen oberhalb von 121°C schmelzen und Polymere aufweisen, deren Erweichungstemperaturen nach Vicat VST/A/50 gemäß ASTM D1525 oberhalb 121°C liegen, und das mindestens eine Mittelschicht (3) aus Polyethylen-Copolymer, wobei das Polyethylen-Copolymer ein Polyolefin ist, Polypropylen-Copolymer, Polypropylen-Homopoylmer oder - Copolymer mit jeweils p < 0,9 g/cm$^3$, Low-Densitiy-Polyethylen (LDPE), Styrol-Ethylen/Butylen-Styrol-Blockcopolymer, Styrol-Ethylen/Propylen-Styrol-Blockcopolymer, SIS, Polyisobutylen (PIB) und/oder Blends der genannten Polymere untereinander oder mit Polypropylen ($\rho \geq 0,9$ g/cm$^3$) und/oder Polyethylen besteht, deren Erweichungspunkt nach Vicat VST/A/50 gemäß ASTM D1525 unterhalb von 70°C liegen.

2. PVC-freie Mehrschichtfolie gemäß Anspruch 1, **dadurch gekennzeichnet, dass** die Mittelschicht (3) mindestens zwei Schichten (6) mit niedriger Erweichungstemperatur aufweist, die Polymere enthalten, deren Erweichungstemperaturen unterhalb von etwa 70°C liegen und mindestens eine Schicht (7) mit hoher Erweichungstemperatur aufweist, die Polymere enthält, deren Erweichungstemperaturen oberhalb von etwa 121°C liegen, wobei die Schichten (6) und (7) jeweils alternierend angeordnet sind.

3. PVC-freie Mehrschichtfolie gemäß Anspruch 1 oder 2, **dadurch gekennzeichnet, dass** die Mittelschicht (3) mindestens 90 $\mu$m sowie die Außen- (2) und Stützschicht (4) jeweils 10-20 $\mu$m dick sind.

4. PVC-freie Mehrschichtfolie gemäß einem der hervorgehenden Ansprüche, **dadurch gekennzeichnet, dass** Mehrschichtfolie zusätzlich noch eine Siegelschicht (5) aufweist.

5. PVC-freie Mehrschichtfolie gemäß Anspruch 4, **dadurch gekennzeichnet, dass** die Siegelschicht (5) Polymere aufweist, deren Erweichungstemperatur unterhalb der Erweichungstemperaturen der Außenschicht (2), der Stützschicht (4) sowie der mindestens einen Schicht (7) liegt.

6. PVC-freie Mehrschichtfolie gemäß Anspruch 4 oder 5, **dadurch gekennzeichnet, dass** die Siegelschicht (5) 15-30 $\mu$m dick ist.

7. PVC-freie Mehrschichtfolie gemäß einem der vorhergehenden Ansprüche, **dadurch gekennzeichnet, dass** alle Schichten als wesentliche Bestandteile Polyolefin-Homopolymere und/oder Polyolefin-Copolymere enthalten.

8. PVC-freie Mehrschichtfolie gemäß einem der vorhergehenden Ansprüche, **dadurch gekennzeichnet, dass** die Mehrschichtfolie im wesentlichen frei von Weichmachern, Antiblockmitteln, Antistatika sowie anderen Füllstoffen ist.

9. PVC-freie Mehrschichtfolie gemäß einem der vorhergehenden Ansprüche, **dadurch gekennzeichnet, dass** die Außenschicht (2) aus einem Polypropylen-Homopolymer, einem Polypropylen-Blockcopolymer, einem Polypropylen-Randomcopolymer mit niedrigem Ethylengehalt und/oder einem High-Density-Polyethylen (HDPE), vorzugsweise einem Polypropylen-Randomcopolymer, besteht.

10. PVC-freie Mehrschichtfolie gemäß einem der Ansprüche 2-8, **dadurch gekennzeichnet, dass** die Stützschicht (4) und die mindestens eine Schicht (7) mit hoher Erweichungstemperatur aus einem Polypropylen-Homopolymer, einem Polypropylen-Copolymer, einem High-Density-Polyethylen (HDPE) oder einem Linear-Low-Density-Polyethylen (LLDPE) und/oder Blends der genannten Polymere besteht.

11. PVC-freie Mehrschichtfolie gemäß einem der Ansprüche 4-8, **dadurch gekennzeichnet, dass** die Siegelschicht (5) aus einem Polypropylen-Copolymer, einem High-Density-Polyethylen (HDPE), einem Linear-Low-Density-Polyethylen (LLDPE) und/oder Blends der genannten Polymere mit einem Styrol-Ethylen/Butylen-Styrol-Blockcopolymer, einem Styrol-Ethylen/Propylen-Styrol-Blockcopolymer, SIS und/oder einem a-Olefin-Copolymer, vorzugsweise aus einem Blend aus einem Polypropylen-Randomcopolymer und einem SIS-Blockcopolymer, besteht.

12. PVC-freie Mehrschichtfolie gemäß einem der vorhergehenden Ansprüche, **dadurch gekennzeichnet, dass** die Mehrschichtfolie eine Flach- oder Schlauchfolie ist.

13. Verfahren zur Herstellung einer PVC-freien Mehrschichtfolie (1) gemäß einem der vorhergehenden Ansprüche, **dadurch gekennzeichnet, dass** die Mehrschichtfolie durch Coextrusion hergestellt wird.

14. Verfahren zur Herstellung einer PVC-freien Mehrschichtfolie (1) gemäß Anspruch 13, **dadurch gekennzeichnet, dass** die hergestellte Folie im Anschluß an die Coextrusion mit Wasser schockgekühlt wird.

15. Verwendung einer PVC-freien Mehrschichtfolie (1) gemäß einem der Ansprüche 1-12 zur Herstellung von medizinischen Beuteln.

16. Verwendung einer Non-PVC-Mehrschichtfolie (1) gemäß Anspruch 15, zur Herstellung von medizinischen Mehrkammerbeuteln.

**Claims**

1. A PVC-free multi-layer film (1), heat-sterilizable at 121°C and upwards, having an outer layer (2), a supporting layer (4), and at least one interposed middle layer (3), **characterised in that** the outer- (2) and the supporting layer (4) each melt at temperatures of above 121°C and have polymers whose Vicat softening points (VST/A/50) according to ASTM D1525 are above 121°C, and that at least one middle layer (3) is comprised of polyethylene copolymer, the polyethylene copolymer being a polyolefin, polypropylene copolymer, polypropylene homopolymer or -copolymer, each having $p < 0.9$ g/cm$^3$, low-density polyethylene (LDPE), styrene-ethylene / butylene-styrene block copolymer, styrene ethylene / propylene-styrene block copolymer, SIS, polyisobutylene (PIB) and/or blends of said polymers, or with polypropylene ($p \geq 0.9$ g/cm$^3$) and/or polyethylene, whose Vicat softening point (VST/A/50) according to ASTM D1525 is below 70°C.

2. A PVC-free multi-layer film according to claim 1, **characterised in that** the middle layer (3) has at least two low softening point layers (6) containing polymers whose softening points are below 70°C, and has at least one high softening point layer (7) containing polymers whose softening points are above 121°C, whereby the layers (6) and (7) are arranged alternately.

3. A PVC-free multi-layer film according to claim 1 or claim 2, **characterised in that** the middle layer (3) is at least 90 μm thick, the outside layer (2) and the supporting layer (4) are 10-20 μm thick in each case.

4. A PVC-free multi-layer film according to any one of the foregoing claims, **characterised in that** the multi-layer film has a sealing layer (5) as well.

5. A PVC-free multi-layer film according to claim 4, **characterised in that** the sealing layer (5) has polymers whose softening point is below the softening points of the outer layer (2), the supporting layer (4) and at least one other layer (7).

6. A PVC-free multi-layer film according to claim 4 or claim 5, **characterised in that** the sealing layer (5) is 15-30 μm thick.

7. A PVC-free multi-layer film according to any one of the foregoing claims, **characterised in that** all layers contain polyolefin homopolymers and/or polyolefin copolymers as essential constituents.

8. A PVC-free multi-layer film according to any one of the foregoing claims, **characterised in that** the multi-layer film is essentially free of plasticizers, anti-blocking agents, antistatic agents or other kinds of filler.

9. A PVC-free multi-layer film according to any one of the foregoing claims, **characterised in that** the outer layer (2) is comprised of a polypropylene homopolymer, a polypropylene block copolymer, a polypropylene random copolymer having low ethylene content and/or a high-density polyethylene (HDPE), preferably a polypropylene random copolymer.

10. A PVC-free multi-layer film according to any one of claims 2-8, **characterised in that** the supporting layer (4) and at least one layer (7) having a high softening point is comprised of a polypropylene homopolymer, a polypropylene copolymer, a high-density polyethylene (HDPE) or a linear low-density polyethylene (LLDPE) and/or blends of said polymers.

11. A PVC-free multi-layer film according to any one of claims 4-8, **characterised in that** the sealing layer (5) is comprised of a polypropylene copolymer, a high-density polyethylene (HDPE), a linear low-density polyethylene (LLDPE) and/or blends of said polymers with a styrene ethylene/butylene-styrene block copolymer, a styrene ethylene/propylene-styrene block copolymer, SIS and/or an α-olefin copolymer, preferably comprising a blend of polypropylene random copolymer and an SIS block copolymer.

**12.** A PVC-free multi-layer film according to any one of the foregoing claims, **characterised in that** the multi-layer film is a flat sheet film or a tubular film.

**13.** A method for producing a PVC-free multi-layer film (1) according to any one of the foregoing claims, **characterised in that** the multi-layer film is produced by means of co-extrusion.

**14.** A method for producing a PVC-free multi-layer film (1) according to claim 13, **characterised in that** the co-extruded film is subjected to shock-cooling, using water.

**15.** The use of a PVC-free multi-layer film (1) according to any one of claims 1-12, to produce medical bags.

**16.** The use of non-PVC multi-layer film (1) according to claim 15, for producing medical multi-chamber bags.

**Revendications**

**1.** Feuille multicouche (1) exempte de PVC, stérilisable à chaud à au moins 121°C, présentant une couche externe (2), une couche de soutien (4) ainsi qu'au moins une couche moyenne (3) disposée entre elles, **caractérisée en ce que** les couches externe (2) et de soutien (4) fondent chacune, à des températures supérieures à 121°C et présentent des polymères dont la température de ramollissement d'après Vicat VST/A/50 selon ASTM D1525 se situent au-dessus de 121°C et **en ce que** la au moins une couche moyenne (3) consiste en un copolymère de polyéthylène, dans lequel le copolymère de polyéthylène est un polyoléfine, un copolymère de polypropylène, un homopolymère ou copolymère de polypropylène, avec chaque fois, p < 0,9 g/cm3, un polyéthylène basse densité (LDPE), un copolymère séquencé styrène-éthylène/butylènestyrène, un copolymère séquencé styrène-éthylène/propylène-styrène, in SIS, un polyisobutène (PIB) et/ou des mélanges des polymères cités les uns avec les autres ou avec du polypropylène ($\rho \geq$0,9 g/cm3) et/ou du polyéthylène, dont le point de ramollissement d'après Vicat VST/A/50 selon ASTM D1525 se situe en dessous de 70°C.

**2.** Feuille multicouche exempte de PVC selon la revendication 1, **caractérisée en ce que** la couche moyenne (3) présente au moins deux couches (6) avec une faible température de ramollissement, qui contiennent des polymères dont les températures de ramollissement sont inférieures à environ 70°C et au moins une couche (7) avec une température de ramollissement plus élevée, qui contient des polymères dont les températures de ramollissement se situent au-dessus d'environ 121°C, où les couches (6) et (7) sont disposées chaque fois, de manière alternée.

**3.** Feuille multicouche exempte de PVC selon la revendication 1 ou 2, **caractérisée en ce que** les couches moyennes (3) sont épaisses d'au moins 90 $\mu$m, et les couches externe (2) et de soutien (4), chaque fois de 10-20 $\mu$m.

**4.** Feuille multicouche exempte de PVC selon l'une quelconque des revendications précédentes, **caractérisée en ce que** la feuille multicouche présente en outre, encore une couche de scellement (5).

**5.** Feuille multicouche exempte de PVC selon la revendication 4, **caractérisée en ce que** la couche de scellement (5) présente des polymères dont la température de ramollissement se situe en dessous de la température de ramollissement de la couche externe (2), de la couche de soutien (4) ainsi que d'au moins une couche (7).

**6.** Feuille multicouche exempte de PVC selon la revendication 4 ou 5, **caractérisée en ce que** la couche de scellement (5) est épaisse de 15-30 $\mu$m.

**7.** Feuille multicouche exempte de PVC selon l'une quelconque des revendications précédentes, **caractérisée en ce que** toutes les couches contiennent comme constituant principal, un homopolymère de polyoléfine et/ou un copolymère de polyoléfine.

**8.** Feuille multicouche exempte de PVC selon l'une quelconque des revendications précédentes, **caractérisée en ce que** la feuille multicouche est essentiellement exempte de plastifiant, agent antiblocage, antistatique ainsi que d'autres charges.

**9.** Feuille multicouche exempte de PVC selon l'une quelconque des revendications précédentes, **caractérisée en ce que** la couche externe (2) consiste en un homopolymère de polypropylène, un copolymère séquencé de polypropylène, un copolymère statistique de polypropylène avec une faible teneur en éthylène et/ou un polyéthylène haute densité (HDPE), de préférence un copolymère statistique de polypropylène.

10. Feuille multicouche exempte de PVC selon l'une quelconque des revendications 2-8, **caractérisée en ce que** la couche protectrice (4) et la au moins une couche (7) avec une température de ramollissement plus élevée, consistent en un homopolymère de polypropylène, un copolymère de polypropylène, un polyéthylène haute densité (HDPE) ou un polyéthylène linéaire basse densité (LLDPE) et/ou des mélanges des polymères cités.

11. Feuille multicouche exempte de PVC selon l'une quelconque des revendications 4-8, **caractérisée en ce que** la couche de scellement (5) consiste en un copolymère de polypropylène, un polyéthylène haute densité (HDPE), un polyéthylène linéaire basse densité (LLDPE) et/ou des mélanges des polymères cités avec un copolymère séquencé styrène-éthylène/butylène-styrène, un copolymère séquencé styrène-éthylène/propylène-styrène, un SIS et/ou un copolymère d'une $\alpha$-oléfine, de préférence en un mélange d'un copolymère statistique de polypropylène et d'un copolymère séquencé SIS.

12. Feuille multicouche exempte de PVC selon l'une quelconque des revendications précédentes, **caractérisée en ce que** la feuille multicouche est une feuille plane ou en tube.

13. Procédé de préparation d'une feuille multicouche (1) exempte de PVC selon l'une quelconques des revendications précédentes, **caractérisé en ce que** la feuille multicouche est préparée par co-extrusion.

14. Procédé de préparation d'une feuille multicouche (1) exempte de PVC selon la revendication 13, **caractérisé en ce que** la feuille préparée est refroidie de manière ultrarapide avec de l'eau en complément de la co-extrusion.

15. Utilisation d'une feuille multicouche (1) exempte de PVC selon l'une quelconques des revendications 1-12, pour la préparation d'une poche médicale.

16. Utilisation d'une feuille multicouche (1) exempte de PVC selon la revendication 15, pour la préparation de poches multicompartimentées médicales.

Fig. 1

Fig. 2

Fig. 3

Fig. 4

**IN DER BESCHREIBUNG AUFGEFÜHRTE DOKUMENTE**

**In der Beschreibung aufgeführte Patentdokumente**

- EP 0179639 A
- US 4643926 A
- EP 0564206 A
- DE 3923464 A
- US 4778697 A
- EP 0282282 A